# EUROPÄISCHE PATENTSCHRIFT

(11) **EP 1 904 757 B1**
(45) Veröffentlichungstag und Bekanntmachung des Hinweises auf die Patenterteilung: **20.04.2011**
(21) Anmeldenummer: 06761749.8
(22) Anmeldetag: 03.07.2006
(51) Int. Cl.: F16F 13/26, F16F 13/10

(54) **HYDRAULISCHES MOTORLAGER**
HYDRAULIC MOTOR BEARING
SUPPORT HYDRAULIQUE DE MOTEUR

(30) Priorität: 19.07.2005 DE 102005034212
(43) Veröffentlichungstag der Anmeldung: 02.04.2008
(73) Patentinhaber: ZF Friedrichshafen AG, 88038 Friedrichshafen (DE)
(72) Erfinder: MEYER, Heinrich, 53639 Königswinter (DE); BINNER, Peter, 53175 Bonn (DE); STIRA, Marc, 53177 Bonn (DE)
(86) Internationale Anmeldenummer: PCT/DE2006/001147
(87) Internationale Veröffentlichungsnummer: WO 2007/009418

(56) Entgegenhaltungen:
- EP-A- 1 031 759
- EP-A- 1 176 336
- EP-A- 1 614 931
- DE-A1- 10 325 720
- DE-A1- 19 919 186
- DE-C1- 4 238 752
- US-A1- 2001 030 390

## Beschreibung

Die Erfindung betrifft ein hydraulisches Motorlager insbesondere für Kraftfahrzeuge mit den im gattungsbildenden Teil des Anspruches 1 genannten Merkmalen.

Derartige hydraulische Motorlager sind aus dem Stand der Technik in unterschiedlicher Ausgestaltung bekannt. Sie sind in der Regel bestimmt für die Lagerung eines Verbrennungsmotors in einem Kraftfahrzeug und sollen die Übertragung störender Schwingungen und Geräusche vom Motor auf die Karosserie verhindern. Die dabei in die Lagerung des Verbrennungsmotors eingeleiteten Schwingungen sind prinzipiell zwei unterschiedlichen Gattungen zuzuordnen.

Eine erste Art von Schwingungen ist in einem Frequenzbereich oberhalb von ca. 30 Hz. angesiedelt und wird vom Motor selbst erregt. Diese Schwingungen haben in der Regel nur eine kleine Amplitude von wenigen Zehntel mm.

Die zweite Art von Schwingungen ist in einem Frequenzbereich bis maximal 12 Hz. angesiedelt und wird im Fahrbetrieb des Kraftfahrzeuges durch das Überfahren von Bodenunebenheiten initiiert. Diese Schwingungen können bei ungünstiger Erregung zu Schüttelbewegungen des Motors führen und sehr viel höhere Amplituden als die erstgenannten Schwingungen erreichen.

Aufgrund der auftretenden Schwingungen im Motorbereich ist ersichtlich, dass zur Verbesserung des Fahrkomforts sowohl die verschiedenen statischen und dynamischen Motorhaltekräfte, die im Fahrbetrieb und Leerlaufbetrieb auftreten, vom Motorlager aufzunehmen und die daraus resultierenden Schwingungen des Motors zu bedämpfen sind als auch darüber hinaus die Übertragung von akustischen Schwingungen, die sich vom Motor auf die Karosserie und damit den Fahrgastraum ausbreiten, zu unterbinden sind. Damit müssen derartige Motorlager in unterschiedlichen Frequenzbereichen hinsichtlich dynamischer Federrate und Verlustwinkel der Dämpfung angepasst sein.

Die dynamische Federrate C_{dyn} stellt dabei ein Maß für die Geräuschdämpfung eines hydraulischen Motorlagers dar und sollte über den gesamten Frequenzbereich, besonders aber im Leerlaufresonanzbereich niedrige Werte aufweisen.

Der genannte Verlustwinkel ðᵥ stellt das Maß für die Dämpfungsfunktion des Motorlagers dar und sollte ein Maximum im Bereich einer von Motor und Fahrzeug abhängigen Resonanzfrequenz unterschiedlicher Größe für Fahrbetrieb und Leerlaufbetrieb aufweisen. Entsprechende Größenordnungen der Resonanzfrequenz sind für den Fahrbetrieb beispielsweise der Frequenzbereich um 10 Hz., wohingegen für den Leerlaufbetrieb der Frequenzbereich um 40 Hz. als Resonanzzone anzusehen ist.

Um die unterschiedlichen Anforderungen von Leerlauf und Fahrbetrieb für die Dämpfungs- und Entkoppelungseigenschaften gattungsgemäßer Motorlager zu optimieren, sind aus dem Stand der Technik steuerbare Motorlager bekannt, bei denen prinzipiell zwei unterschiedliche Dämpfungszustände in aller Regel durch eine Unterdruckansteuerung herbeigeführt werden.

So ist beispielsweise aus der DE 601 00 229 T2 ein hydraulisches, schwingungsdämpfendes Lager bekannt, bei dem mittels einer Unterdrucksteuerung eine zusätzliche mit der Arbeitskammer des Motorlagers in Verbindung stehende Ausgleichskammer für die Dämpfungsfunktion des Lagers zugeschaltet werden kann, so dass sich je nach Schaltstellung eine härtere oder weichere Dämpfungscharakteristik des Lagers ergibt. Eine derartige in der oben angeführten Schutzschrift offenbarte Konstruktion hat sich zwar prinzipiell bewährt, ist jedoch im Aufbau relativ kompliziert und somit von den Herstellungskosten ungünstig.

Die kostenbedingten Nachteile ergeben sich insbesondere daraus, dass eine Unterdruckansteuerung der Schaltzustände des Lagers mit der Verlegung entsprechender Unterdruckleitungen verbunden ist, die sowohl von den Materialkosten als auch durch die notwendigen Verlegearbeiten kostennachteilig sind.

Die DE 42 38 752 C1 zeigt ferner ein hydraulisches Motorlager mit einer gummielastischen Umfangswand, die eine flüssigkeitsgefüllte Arbeitskammer umgibt. Weiterhin ist bei diesem bekannten Lager zwischen Arbeitskammer und Ausgleichskammer eine Trennplatte angeordnet, in der ein Überströmkanal ausgebildet ist, der beide Kammern miteinander strömungsleitend verbindet. Ferner ist ein Bypasskanal vorgesehen, der Arbeitskammer mit einer weiteren Ausgleichkammer verbindet, die aus einer elastischen Ausgleichsmembran gebildet ist, die an ihrer Außenseite von einer festen Wandung umgeben ist, wobei zwischen Membran und Wandung ein Zwischenraum angeordnet ist, der mit Luft befüllbar und entleerbar ist. Darüber hinaus sind eine Schaltventil und ein Rückschlagventil vorgesehen, die jeweils mit einem eigenen Kanal den Zwischenraum mit der Atmosphäre verbinden, wobei der Belüftungskanal über die Schaltvorrichtung verschlossen werden kann. Das Rückschlagventil ist dabei aufwendig aus mehreren mechanischen Bauteilen aufgebaut.

Aufgabe der vorliegenden Erfindung ist es daher, ein hydraulisches Motorlager insbesondere für Kraftfahrzeuge mit einer von einer gummielastischen Umfangswand umgebenen flüssigkeitsgefüllten Arbeitskammer, einer Ausgleichskammer, die über einen Überströmkanal in einer Trennplatte zwischen Arbeitskammer und Ausgleichskammer mit der Arbeitskammer in Verbindung steht und einer weiteren Ausgleichskammer, welche über einen Bypasskanal mit der Arbeitskammer verbunden ist, wobei die weitere Ausgleichskammer aus einem elastischem Balg gebildet ist, der an seiner Außenseite von einer festen Wandung umgeben ist, und wobei zwischen Bald und Wandung ein Zwischenraum angeordnet ist, welcher durch eine Schaltvorrichtung mit einem komprimierbaren Medium, vorzugsweise Luft, befüllbar und von dem Medium entleerbar ist, so weiterzubilden, dass eine kostengünstige Steuerung des Motorlagers in die für den Fahrbetrieb und den Leerlaufbetrieb maßgeblichen Dämpfungszustände möglich ist.

Darüber hinaus soll unter allen Betriebsbedingungen eine zuverlässige und wartungsarme Ansteuerung gewährleistet sein.

Diese Aufgabe wird in Zusammenschau mit den gattungsbildenden Merkmalen durch die im kennzeichnenden Teil des Anspruches 1 offenbarte technische Lehre gelöst.

Erfindungswesentlich dabei ist es, dass die Schaltvorrichtung aus mindestens einem Rückschlagventil, ausgeataltet als aus einem elastischen Material bestehender Stopfen mit einer zentral angeordneten Bohrung, und mindestens einem Schaltventil gebildet ist, wobei das Rückschlagventil in einem Entlüftungskanal als Verbindungsweg des Zwischenraumes mit der Außenseite der festen Wandung derart angeordnet ist, dass nur ein Durchfluss des im Zwischenraum befindlichen Mediums zur Außenseite der Wandung möglich ist, und wobei das Schaltventil an einem Belüftungskanal als weiteren Verbindungsweg des Zwischenraumes mit der Außenseite der Wandung angeordnet ist und den Belüftungskanal verschließen oder öffnen kann.

Durch die neuartige Gestaltung der Schaltungsvorrichtung lassen sich alle wesentlichen Bauteile innerhalb des Motorlagers anordnen, wobei die Zuleitungen des vorzugsweise elektrisch betätigten Schaltventils problemlos in vorhandene Kabelbäume des Fahrzeuges integriert werden können. Durch die beschriebene Schaltvorrichtung lassen sich somit die Herstell-und Montagekosten eines gattungsgemäßen hydraulischen Motorlagers signifikant senken.

Zum Verständnis der Funktionsweise der Schaltvorrichtung ist zunächst festzuhalten, dass die beschriebenen gattungsgemäßen hydraulischen Motorlager üblicherweise auf eine Dämpffrequenz im Bereich von ca. 10 Hz. abgestimmt werden, in der in der Regel die Resonanzfrequenz für den Fahrbetrieb angesiedelt ist. Eine derartige Abstimmung wird durch entsprechende Festlegung von Länge und Querschnitt des Überströmkanals zwischen Arbeitskammer und Ausgleichskammer festgelegt.

Die zusätzlich vorhandene weitere Ausgleichskammer, welche durch den Bypasskanal ebenfalls mit der Arbeitskammer in Verbindung steht, kann durch die erwähnte Schaltvorrichtung zugeschaltet werden, so dass sich die ursprüngliche Dämpfungsfrequenz von ca. 10 Hz. in einen höheren Frequenzbereich oberhalb von 20 Hz. verschiebt, in der üblicherweise die Leerlauffrequenz eines Verbrennungsmotors liegt.

Somit sind durch die wahlweise Zu- und Abschaltung der zusätzlichen Ausgleichskammer für den Fahrzustand als auch für den Leerlaufzustand nahezu optimale Dämpfungseigenschaften des Motorlagers unter allen Betriebsbedingungen zu realisieren. Die Zuschaltung der weiteren Ausgleichskammer geschieht dabei entsprechend der erfindungsgemäßen Schaltvorrichtung durch Öffnen des Belüftungskanals durch das im Motorlager angeordnete elektrisch betätigte Schaltventil. Die Öffnung des Belüftungskanals bewirkt dabei das freie Ein- und Ausströmen der Luft aus und in den Zwischenraum zwischen dem die weitere Ausgleichskammer bildenden Balg und der den Balg umgebenden Wandung. Schwingungen, die durch die mit dem Motor direkt über eine entsprechende Aufnahme verbundene gummielastische Umfangswand der Arbeitskammer in diese eingeleitet und auf die Flüssigkeit innerhalb der Arbeitskammer übertragen werden, können von dieser über den Bypasskanal in die weitere Ausgleichskammer ohne nennenswerten Gegendruck eingeleitet werden.

Sind für den Fahrbetrieb die Dämpfungseigenschaften der zusätzlichen Ausgleichskammer nicht notwendig, da das Motorlager auf den Frequenzbereich von ca. 10Hz. abzustimmen ist, so wird der Belüftungskanal durch das Schaltventil verschlossen. Die weiterhin in die Ausgleichskammer über die Hydraulikflüssigkeit eingeleiteten Schwingungen führen nach Schließen des Belüftungskanals dazu, dass das Luftpolster über das zusätzlich vorhandene Rückschlagventil, welches ein Entweichen der Luft aus dem Zwischenraum gestattet - ein Eindringen von Luft dagegen sperrt - aus dem Zwischenraum herausgedrückt wird. Der die Ausgleichskammer bildende Balg legt sich nach Herausdrücken des Luftpolsters aus dem Zwischenraum an die den Balg umgebende Wandung der weiteren Ausgleichskammer an, so dass eine Einleitung von Schwingungen in diese weitere Ausgleichskammer unterbunden ist.

Zur Wiederherstellung der vorteilhaften Dämpfungseigenschaften für den Leerlaufbetrieb des hydraulischen Motorlagers wird das elektrisch betätigte Schaltventil so angesteuert, dass eine Öffnung des Belüftungskanals herbeigeführt wird, so dass sich wiederum ein belüfteter Zwischenraum zwischen Balg und umgebener Wandung der zusätzlichen Ausgleichskammer ergibt.

Nachfolgend wird ein Ausführungsbeispiel des Gegenstandes der Erfindung anhand der beigefügten Zeichnungen näher erläutert.

Es zeigt:
- Figur 1: eine Schnittdarstellung durch ein erfindungsgemäßes hydraulisches Motorlager,
- Figur 2: eine perspektivische Darstellung des unteren Gehäuseteils des Motorlagers aus Figur 1 und
- Figur 3: eine vergrößerte Teildarstellung eines Teilbereiches des unteren Gehäuseteils aus Figur 2 in Draufsicht.

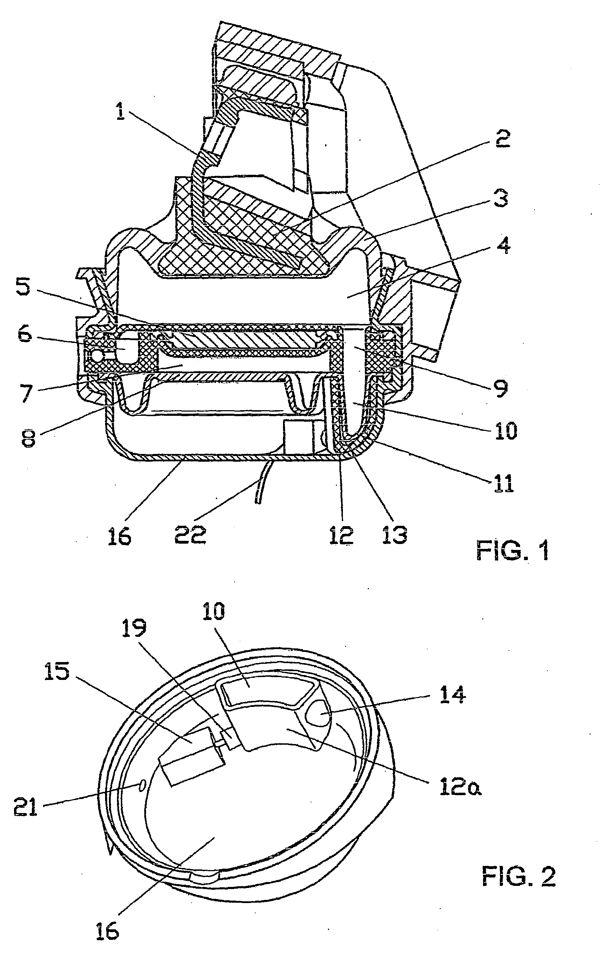

Gemäß der Darstellung der Figur 1 besitzt das erfindungsgemäße hydraulische Motorlager in seinem oberen Bereich ein motorseitiges Befestigungselement 1, welches zur Festlegung des Motorlagers an einem Motorhaltepunkt des im Kraftfahrzeug befindlichen Antriebsmotors dient. Das Befestigungselement 1 ist über ein Zwischenteil 2 an einer gummielastischen Umfangswand 3 festgelegt, wobei die Verbindung zwischen Umfangswand 3 und Zwischenteil 2 in der Regel durch einen Vulkanisationsprozess herbeigeführt wird. Die Umfangswand 2 bildet an ihrer Innenseite eine so genannte Arbeitskammer 4, welche mit einer Hydraulikflüssigkeit gefüllt ist.

Neben der Umfangswand 3 wird die Arbeitskammer 4 begrenzt durch eine Trennplatte 5, die an der dem Zwischenteil 2 abgewandten Unterseite der Arbeitskammer angeordnet ist. Innerhalb der Trennplatte 5 befindet sich ein Überströmkanal 6, welcher eine Verbindung zu einer unterhalb der Trennplatte 5 angeordneten Ausgleichskammer 7 herstellt. Die Ausgleichskammer 7 ist einerseits durch die Trennplatte 5 und andererseits durch einen unterhalb der Trennplatte 5 angeordneten Balg 8 gebildet. Der Balg 8 besteht aus elastischem Material und ist so ausgebildet, dass sich eine im Wesentlichen ringförmige Gestalt der Ausgleichskammer ergibt. In der Trennplatte 5 befindet sich darüber hinaus ein Bypasskanal 9, der eine Verbindung herstellt zwischen der Arbeitskammer 4 und einer -weiteren im unteren Bereich des Motorlagers vorhandenen Ausgleichskammer 10. Die Ausgleichslcammer 10 wird analog der Ausgleichskammer 7 durch einen Balg 11 aus elastischem Material begrenzt, der im vorliegenden Ausführungsbeispiel einstückig mit dem die Ausgleichskammer 7 bildenden Balg 8 ausgeführt ist. An der Außenseite des Balges 11 ist die Ausgleichskammer 10 von einer Wandung 12 umgeben, wobei Balg 11 und Wandung 12 so ausgestaltet sind, dass sich zwischen ihnen ein Zwischenraum 13 bilden kann.

Bei dem beschriebenen hydraulischen Motorlager sind durch das Vorhandensein und die Gestaltung der weiteren Ausgleichskammer 10 prinzipiell zwei unterschiedliche Dämpfungscharakteristika möglich. Diese unterschiedlichen Dämpfungscharakteristika ergeben sich durch die Tatsache, dass der Zwischenraum 13 zwischen dem Balg 11 und der den Balg umgebenden Wandung 12 mit einem komprimierbaren Medium, vorzugsweise Luft, befüllt sein kann, oder dass der Balg 11 ohne zwischengeschaltetes Luftpolster an der Wandung 12 zur Anlage kommt.

Im letztgenannten Zustand einer Anlage des Balges 11 an der Wandung 12 ist eine Dämpfungsfunktion des Motorlagers allein durch die Bewegung der in der Arbeitskammer 4, dem Überstromkanal 6 sowie der Ausgleichskammer 7 vorhandenen Hydraulikflüssigkeit gegeben. Über das Befestigungselement 1 in das Motorlager eingeleitete Schwingungen des Antriebsmotors werden dabei durch die gummielastische Umfangswand 3 auf die Hydraulikflüssigkeit innerhalb der Arbeitskammer 4 übertragen, was zu einer partiellen Verdrängung der Flüssigkeit aus der Arbeitskammer 4 in den Überstromkanal 6 führt. Die Flüssigkeit gelangt dabei in die Ausgleichskammer 7, wo sie das unterhalb der Ausgleichskammer vorhandene Luftpolster partiell verdrängt.

Eine weiter gehende Bedämpfung der Schwingungen in Folge einer innerhalb der Trennplatte angeordneten zusätzlichen Dämpfungsvorrichtung unterstützt die Gesamtdämpfüngsfunktion des Motorlagers. Auf eine detaillierte Erläuterung der Funktion wird an dieser Stelle verzichtet, da sie im vorliegenden Fall keine erfindungswesentlichen Merkmale betrifft.

Durch die Wahl von Länge und Querschnitt des Überströmkanals in Verbindung mit der in der Trennplatte vorhandenen zusätzlichen Dämpfungsvorrichtung wird je nach den schwingungstechnischen Rahmenbedingungen eine Abstimmung des Motorlagers auf eine im Fahrbetrieb vorhandene Dämpfungsfrequenz im Bereich von etwa 10 Hz. bewirkt.

Wie oben bereits geschildert, treten bei stehendem Fahrzeug im Leerlaufbetrieb des Motors Resonanzschwingungen im Bereich oberhalb von 20 Hz. auf, für deren Dämpfung die Abstimmung des Motorlagers auf eine Dämpfungsfrequenz von 10 Hz. unzureichend ist. Um hier Abhilfe zu schaffen, kann das beschriebene Motorlager durch die Zuschaltung des zusätzlichen Bypasskanales 9 auf eine höhere Dämpfungsfrequenz im Bereich oberhalb von 20 Hz. abgestimmt werden.

Zu diesem Zweck ist es notwendig, zwischen dem Balg 11 der Ausgleichskammer 10 und der den Balg umgebenden Wandung 12 einen Zwischenraum 13 auszubilden, um eine Strömung in den Bypasskanal 9 zu ermöglichen.

Die beiden unterschiedlichen Schaltzustände des Motorlagers sind somit durch ein Befüllen bzw. Entleeren des Zwischenraumes 13 mit einem komprimierbaren Medium, vorzugsweise Luft, zu realisieren. Das Befüllen und Entleeren des Zwischenraumes 13 geschieht dabei erfindungsgemäß durch eine Schaltvorrichtung, welche im Wesentlichen aus zwei Elementen, einem Rückschlagventil 14 sowie einem Schaltventil 15 besteht. Beide Elemente der Schaltvorrichtung sind zur Verdeutlichung in der Figur 2 dargestellt, die nur den unteren Bereich des hydraulischen Motorlagers im Bereich des Bodendeckels 16 darstellt. Der Bodendeckel 16 bildet dabei den unteren Abschluss des Motorlagers und schützt den die Ausgleichskammer 7 bildenden Balg 8 vor Beschädigungen. Gleichzeitig ist innerhalb des Bodendeckels 16 seitlich, wie bereits aus der Figur 1 ersichtlich ist, die als Trog ausgebildete Wandung 12 der zusätzlichen Ausgleichskammer 10 angeordnet. Die den Balg 11 umgebende Wandung 12 ist dabei aus einer umlaufenden Seitenwandung 12a und einem Boden 12b gebildet.

Wie der Figur 2 zu entnehmen ist, befindet sich in der Seitenwandung 12a eine Durchgangsbohrung, in der ein Rückschlagventil 14 aus elastischem Material angeordnet ist. Darüber hinaus befindet sich in der Seitenwandung 12a ein weiterer Belüftungskanal 17, welcher über das Schaltventil 15 geöffnet oder verschlossen werden kann.

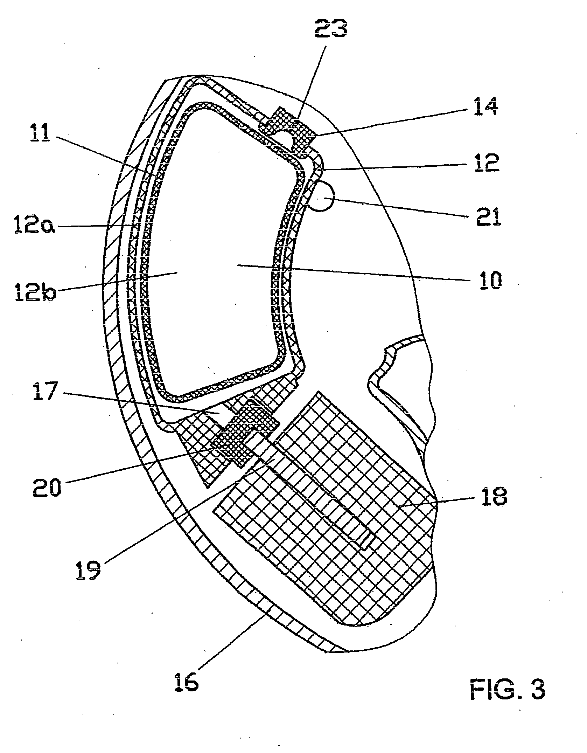

Das Schaltventil 15 ist im dargestellten Ausführungsbeispiel als elektrisch betätigtes Magnetventil ausgebildet. Das Magnetventil ist dabei in aus dem Stand der Technik bekannter Weise gestaltet und weist einen Gehäusekörper 18 mit darin befindliche Magnetspule, einen translatorisch beweglichen Stößel 19 sowie ein am vorderen freien Ende des Stößels 19 angeordneten Ventilstopfen 20 auf. Durch Ein- und Ausfahren des Stößels 19 kann entsprechend der vergrößerten Darstellung der Figur 3 der Belüftungskanal 17 zum Innenraum des Bodendeckels 16 hin geöffnet oder verschlossen werden. Der Bodendeckel 16 weist zum Luftaustausch mit der Außenseite des Motorlagers in seiner Wandung eine Belüftungsöffnung 21 auf.

Wie den Figuren zu entnehmen ist, ist die gesamte Betätigungsvorrichtung innerhalb des Bodendeckels 16 angeordnet, wobei allein die elektrischen Zuleitung 22 durch den Bodendeckel 16 nach außen geführt werden muss.

Zur Erläuterung der Herbeiführung der beiden unterschiedlichen Schaltzustände des Motorlagers wird zunächst davon ausgegangen, dass das Schaltventil 15 sich im geschlossenen Zustand befindet und somit ein Entweichen der innerhalb des Zwischenraumes 13 vorhandenen Luft durch den Belüftungskanal 17 nicht möglich ist. Da jedoch zusätzlich zum Schaltventil 15 in der Wandung 12 der Ausgleichskammer 10 das Rückschlagventil 14 angeordnet ist, welches so gestaltet ist, dass nur ein Entweichen von Luft aus dem Zwischenraum 13 möglich ist, kann die Einleitung von Bewegungen durch die Hydraulikflüssigkeit in die Ausgleichskammer 10 zu einer Verdrängung der Luft im Zwischenraum 13 führen. Ist die Luft aus dem Zwischenraum 13 verdrängt, gelangt der Balg 11 an der Wandung 12 zur Anlage, somit ist eine Zusatzdämpfungsfunktion der Ausgleichskammer 10 nicht mehr gegeben.

Es ist folglich nur die Ausgleichskammer 7 wirksam, so dass das erfindungsgemäße Motorlager in klassischer Weise als schwingungsdämpfendes Lager für den Fahrbetrieb arbeitet. Schwingungen mit niedriger Amplitude, zum Beispiel unter 0,5 bis 1 mm (und mit relativ hoher Frequenz, zum Beispiel über 20 Hz.) werden dabei mittels der nicht näher besprochenen Dämpfungsvorrichtung innerhalb der Trennplatte 5 bedämpft, wohingegen Schwingungen mit niedrigerer Frequenz (zum Beispiel unter 20 Hz.) und mit größerer Amplitude (zum Beispiel über 1 mm) durch den Transfer der Hydraulikflüssigkeit in den Überströmkanal bedampft werden, wobei der Transfer durch das unterhalb der Ausgleichskammer 7 vorhandene Luftpolster innerhalb des Bodendeckels 16 ermöglicht wird, welches partiell durch die in die Ausgleichskammer 7 eindringende Flüssigkeit verdrängt wird.

Soll im Leerlaufbetrieb die Ausgleichskammer 10 eine zusätzliche Dämpfungsfunktion im Hinblick auf eine Verschiebung der Dämpfungsfrequenz in einen Bereich oberhalb von 20 Hz. bereitstellen, so wird zur Herstellung eines Luftpolsters im Zwischenraum 13 das Schaltventil 15 geöffnet. Durch den Belüftungskanal 17 kann somit Luft aus dem Inneren des Bodendeckels 16 in den Zwischenraum 13 einströmen. Durch diese Maßnahme ist eine zusätzliche Aufnahme von Flüssigkeit in der Ausgleichskammer 10 über den Bypasskanal 9 möglich.

Die Gestaltung des Rückschlagventils 14 wird insbesondere aus der vergrößerten Darstellung der Figur 3 deutlich. Es handelt sich bei dem Rückschlagventil um einen im Querschnitt rund oder oval gestalteten aus elastischem Material hergestellten Stopfen, welcher in seiner Mitte eine Bohrung 23 aufweist, die üblicherweise durch die elastische Wirkung des Materials verschlossen ist. Wird von der dem Zwischenraum zugewandten Seite des Rückschlagventils Druck auf dieses ausgeübt, so öffnet sich die Bohrung 23 minimal, so dass ein Entweichen des, innerhalb des Zwischenraumes 13 vorhandenen komprimierbaren Mediums, vorzugsweise Luft, möglich ist. Lässt der Druck auf das Rückschlagventil in Folge des Entleerens des Zwischenraumes 13 nach, so verschließt sich die Bohrung 23 automatisch, so dass ein Rückströmen von Luft aus dem Innenbereich des Bodendeckels 16 in den Zwischenraum 13 zuverlässig verhindert wird.

Die Beschreibung der Erfindung macht deutlich, dass die neuartige Schaltvorrichtung vollständig innerhalb des Motorlagergehäuses und hier innerhalb des Innenraumes des Bodendeckels 16 angeordnet werden kann. Es ist im Gegensatz zu der aufwendigen Betätigung von aus dem Stand der Technik bekannten Motorlagern mittels Unterdrucksteuerung nur die elektrische Speisung des Magnetventils notwendig, was den Montageaufwand für das erfindungsgemäße hydraulische Motorlager wesentlich verringert.

### Bezugszeichenliste

- 1: Befestigungselement
- 2: Zwischenteil
- 3: Umfangswand
- 4: Arbeitskammer
- 5: Trennplatte
- 6: Überströmkanal
- 7: Ausgleichskammer
- 8: Balg
- 9: Bypasskanal
- 10: Ausgleichskammer
- 11: Balg
- 12: Wandung
- 12a: Seitenwandung
- 12b: Boden
- 13: Zwischenraum
- 14: Rückschlagventil
- 15: Schaltventil
- 16: Bodendeckel
- 17: Belüftungskanal
- 18: Gehäusekörper
- 19: Stößel
- 20: Ventilstopfen
- 21: Belüftungsöffnung
- 22: Zuleitung
- 23: Bohrung

## Patentansprüche

1. Hydraulisches Motorlager, insbesondere für Kraftfahrzeuge, mit einer von einer gummielastischen Umfangswand (3) umgebenen flüssigkeitsgefüllten Arbeitskammer (4), einer Ausgleichskammer (7), die über einen Überströmkanal (6) in einer Trennplatte (5) zwischen Arbeitskammer (4) und Ausgleichskammer (7) mit der Arbeitskammer (4) in Verbindung steht und einer weiteren Ausgleichskammer (10), welche über einen Bypasskanal (9) mit der Arbeitskammer (4) verbunden ist, wobei die weitere Ausgleichskammer (10) aus einem elastischen Balg (11) gebildet ist, der an seiner Außenseite von einer festen Wandung (12) umgeben ist und wobei zwischen Balg (11) und Wandung (12) ein Zwischenraum (13) angeordnet ist, welcher durch eine Schaltvorrichtung mit einem komprimierbaren Medium, vorzugsweise Luft, befüllbar und von dem Medium entleerbar ist,
wobei die Schaltvorrichtung aus mindestens einem Rückschlagventil (14) und mindestens einem Schaltventil (15) gebildet ist, wobei das Rückschlagventil (14) in einem Entlüftungskanal als Verbindungsweg des Zwischenraumes (13) mit der Außenseite der festen Wandung (12) derart angeordnet ist, dass nur ein Durchfluss des im Zwischenraum (13) befindlichen Mediums zur Außenseite der Wandung (12) möglich ist und wobei das Schaltventil (15) an einem Belüftungskanal (17) als weiteren Verbindungsweg des Zwischenraumes (13) mit der Außenseite des Motorlagers angeordnet ist und den Belüftungskanal (17) verschließen oder öffnen kann.
**dadurch gekennzeichnet, dass**
das Rückschlagventil (14) als aus elastischem Material bestehender Stopfen mit einer zentral angeordneten Bohrung (23) ausgestaltet ist.

2. Hydraulisches Motorlager nach Anspruch 1,
**dadurch gekennzeichnet, dass**
das Schaltventil (15) als elektrisches Magnetschaltventil ausgebildet ist.

3. Hydraulisches Motorlager nach einem der Ansprüche 1 bis 2,
**dadurch gekennzeichnet, dass**
das Schaltventil (15) innerhalb des Gehäuses (18) des Motorlagers unterhalb der Ausgleichskammer (7) angeordnet ist.

4. Hydraulisches Motorlager nach einem der Ansprüche 1 bis 3,
**dadurch gekennzeichnet, dass**
der Entlüftungskanal und der Belüftungskanal (17) in den dem Bypasskanäl (9) abgewandten unteren Bereich der weiteren Ausgleichskammer (18) angeordnet sind.

## Claims

1. Hydraulic engine bearing, in particular for motor vehicles, having a liquid-filled working chamber (4) surrounded by a resiliently elastic circumferential wall (3), having an equalizing chamber (7), which is connected to the working chamber (4) via an overflow channel (6) in a dividing plate (5) between working chamber (4) and equalizing chamber (7), and having a further equalizing chamber (10), which is connected to the working chamber (4) via a bypass channel (9), wherein the further equalizing chamber (10) is formed from an elastic bellows (11) which is surrounded on its outside by a fixed wall (12) and wherein an intermediate space (13) is arranged between bellows (11) and wall (12) and can be filled with a compressible medium, preferably air, and emptied of the medium, by a switching device, wherein the switching device is formed from at least one non-return valve (14) and at least one switching valve (15), wherein the non-return valve (14) is arranged in a venting channel as a connecting path for the intermediate space (13) with the outside of the fixed wall (12), such that it is possible only for the medium located in the intermediate space (13) to flow to the outside of the wall (12) and wherein the switching valve (15) is arranged on a ventilation channel (17) as a further connecting path for the intermediate space (13) to the outside of the engine bearing and can close or open the ventilation channel (17), **characterized in that** the non-return valve (14) is configured as a plug which is made of an elastic material and has a centrally arranged bore (23).

2. Hydraulic engine bearing according to Claim 1, **characterized in that** the switching valve (15) is in the form of an electric solenoid switching valve.

3. Hydraulic engine bearing according to Claims 1 and 2, **characterized in that** the switching valve (15) is arranged inside the housing (18) of the engine bearing underneath the equalizing chamber (7).

4. Hydraulic engine bearing according to one of Claims 1 to 3, **characterized in that** the venting channel and the ventilation channel (17) are arranged in the lower region of the further equalizing chamber (18), said lower region facing away from the bypass channel (9).

## Revendications

1. Support hydraulique de moteur, en particulier pour véhicules automobiles, comprenant une chambre de travail (4) remplie de liquide et entourée par une paroi périphérique (3) ayant l'élasticité du caoutchouc, une chambre de compensation (7), qui est en liaison avec la chambre de travail (4) par le biais d'un canal de trop-plein (6) dans une plaque de séparation (5) entre la chambre de travail (4) et la chambre de compensation (7) et une chambre de compensation supplémentaire (10), qui est connectée à la chambre de travail (4) par le biais d'un canal de dérivation (9), la chambre de compensation supplémentaire (10) étant formée par un soufflet élastique (11) qui est entouré sur son côté extérieur par une paroi fixe (12) et un espace intermédiaire (13) étant disposé entre le soufflet (11) et la paroi (12), lequel peut être rempli par un dispositif de commutation avec un fluide compressible, de préférence de l'air, et être vidé de ce fluide,
le dispositif de commutation étant formé d'au moins un clapet anti-retour (14) et d'au moins une soupape de commutation (15), le clapet anti-retour (14) étant disposé dans un canal de désaérage en tant que chemin de raccordement de l'espace intermédiaire (13) avec le côté extérieur de la paroi fixe (12), de telle sorte que seulement un écoulement du fluide se trouvant dans l'espace intermédiaire (13) vers le côté extérieur de la paroi (12) soit possible, et la soupape de commutation (15) étant disposée au niveau d'un canal de ventilation (17) en tant que chemin de raccordement supplémentaire de l'espace intermédiaire (13) avec le côté extérieur du support de moteur et pouvant fermer ou ouvrir le canal de ventilation (17),
**caractérisé en ce que**
le clapet anti-retour (14) est configuré sous forme de bouchon en matériau élastique avec un alésage central (23).

2. Support hydraulique de moteur selon la revendication 1,
**caractérisé en ce que**
la soupape de commutation (15) est réalisée sous forme d'électrovanne de commutation électrique.

3. Support hydraulique de moteur selon l'une quelconque des revendications 1 à 2,
**caractérisé en ce que**
la soupape de commutation (15) est disposée à l'intérieur du boîtier (18) du support de moteur en dessous de la chambre de compensation (7).

4. Support hydraulique de moteur selon l'une quelconque des revendications 1 à 3,
**caractérisé en ce que**
le canal de désaérage et le canal de ventilation (17) sont disposés dans la région inférieure opposée au canal de dérivation (9) de la chambre de compensation supplémentaire (10).
